(19) Europäisches Patentamt
European Patent Office
Office européen des brevets

(11) **EP 3 837 497 B1**

(12) **EUROPÄISCHE PATENTSCHRIFT**

(45) Veröffentlichungstag und Bekanntmachung des Hinweises auf die Patenterteilung:
**21.06.2023 Patentblatt 2023/25**

(21) Anmeldenummer: **19742710.7**

(22) Anmeldetag: **17.07.2019**

(51) Internationale Patentklassifikation (IPC):
***G01D 18/00*** *(2006.01)*

(52) Gemeinsame Patentklassifikation (CPC):
**G01D 18/00;** G01D 5/2291; G01D 2218/10

(86) Internationale Anmeldenummer:
**PCT/EP2019/069174**

(87) Internationale Veröffentlichungsnummer:
**WO 2020/035250 (20.02.2020 Gazette 2020/08)**

(54) **TRANSFORMATOR MIT TESTSCHALTUNG**

TRANSFORMER HAVING A TEST CIRCUIT

TRANSFORMATEUR COMPRENANT UN CIRCUIT DE TEST

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2018 DE 102018213783**

(43) Veröffentlichungstag der Anmeldung:
**23.06.2021 Patentblatt 2021/25**

(73) Patentinhaber: **Continental Automotive Technologies GmbH**
**30165 Hannover (DE)**

(72) Erfinder: **LEHMANN, Sören**
**60488 Frankfurt am Main (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
EP-A1- 0 768 515    EP-A1- 2 975 719
WO-A1-2015/044307

**Beschreibung**

Die Erfindung betrifft einen Transformator sowie einen Sensor mit einem solchen Transformator.

Aus der DE 44 259 03 C3 und der EP 238 922 B1 und der WO 2015 044 307 A1 sind Transformatoren bekannt, die als Positionssensoren nach dem Prinzip der linearen Wegmessung basierend auf einer permanentmagnetischen linearen kontaktlosen Verschiebung, PLCD genannt, arbeiten. Derartige Positionssensoren sind auch als lineare induktive Positionssensor, LIPS genannt, bekannt.

Typischerweise weisen solche Transformatoren eine durchgehende Primärwicklung bzw. Primärinduktivität auf einem weichmagnetischen Kern auf. An den Schenkelenden des Kerns sind Sekundärspulen bzw. Sekundärinduktivitäten angeordnet. Diese Sekundärinduktivitäten werden insbesondere in Sensoren für Anwendungen mit höchsten Sicherheitsansprüchen auch redundant, d.h. jeweils übereinander angeordnet aufgebracht. Grundsätzlich überdecken sich Primärinduktivität und Sekundärinduktivität, je nach Konstruktion des Übertragers auch nur teilweise, so dass es im Fehlerfall zu galvanischen Verbindungen kommen kann, die das Messergebnis verfälschen können. Weitere fehlerhafte Messergebnisse können durch Unterbrechung der Sekundärwicklungen entstehen.

Insbesondere in Weg- oder Winkelsensoren mit höchsten Sicherheitsansprüchen, wie sie z.B. für die Erfassung des Bremswunsches in der elektrohydraulischen Bremse eingesetzt werden, erlangen insbesondere galvanische Verbindungen bzw. Kurzschlüsse zwischen den verschiedenen Sekundär- Wickelpaketen, sowie zwischen Primärwicklung und Sekundärwicklung höhere Bedeutung, weil diese sich vielfach als sogenannte Fehler gleichen Ursprungs ausprägen. In der Folge eines solchen Fehlers ist die eigentlich redundante Arbeitsweise nicht mehr gegeben, weil der Fehler gleichen Ursprungs beide redundanten Pfade des Transformators ähnlich oder gar gleichermaßen verfälscht. Ein Vergleich der beiden Pfadsignale ist demzufolge in solch einer Fehlersituation nicht mehr sinnvoll.

Es ist daher Aufgabe der Erfindung, einen Transformator bzw. einen Sensor anzugeben, der eine zuverlässige bzw. präzise bzw. umfassende Fehlererkennung zulässt.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Transformator einen Primärschaltkreis mit einer Primärinduktivität, einen ersten Sekundärschaltkreis mit einer von der Primärinduktivität galvanisch getrennten und mit der Primärinduktivität gekoppelten ersten Sekundärinduktivität, einen zweiten Sekundärschaltkreis mit einer von der Primärinduktivität galvanisch getrennten und mit der Primärinduktivität gekoppelten zweiten Sekundärinduktivität, wobei die zweite Sekundärinduktivität redundant zu der ersten Sekundärinduktivität ausgeführt ist, wobei die erste und zweite Sekundärinduktivität an eine oder je an eine Gleichspannungsquelle sowie je an eine Testschaltung mit einem Abgriffspunkt zum Abgreifen einer Testspannung angeschlossen sind. Der Transformator weist einen dritten Sekundärschaltkreis mit einer von der Primärinduktivität galvanisch getrennten und mit der Primärinduktivität gekoppelten dritten Sekundärinduktivität und einen vierten Sekundärschaltkreis mit einer von der Primärinduktivität galvanisch getrennten und mit der Primärinduktivität gekoppelten vierten Sekundärinduktivität auf, wobei die vierte Sekundärinduktivität redundant zu der dritten Sekundärinduktivität ausgeführt ist, wobei die dritte und vierte Sekundärinduktivität je an eine Gleichspannungsquelle oder an die Gleichspannungsquelle der ersten und zweiten Sekundärinduktivität sowie je an eine Testschaltung mit einem Abgriffspunkt zum Abgreifen einer Testspannung angeschlossen sind, wobei die Sekundärinduktivitäten jeweils einen eigenen Masseanschluss und jeweils eine galvanische Abkopplung von dem Masseanschluss aufweisen.

Eine solche Ausführung ist beispielsweise für eine Verwendung des Transformators in einem Wegsensor besonders nützlich.

Mit Hilfe der Testspannungen lassen sich verschiedene fehlerhafte Zustände nicht nur erkennen, sondern auch unterscheiden.

Die Erfindung basiert zunächst auf der Erkenntnis, dass fehlerhafte Zustände erkennbar gemacht werden können, indem bestimmte Gleichspannungspotenziale der eigentlich übertragenen Wechselspannung überlagert werden, zumal sich Gleichspannungen nicht störend auf die induktive Kopplung auswirken. Als grundsätzliche Einschränkung eines auf dem Vergleich von Gleichspannungspotenzialen basierenden Diagnoseverfahrens ergibt sich jedoch, dass Kurzschlussfehler ausschließlich nur zwischen Windungspaketen erkannt werden können, die im regulären, deshalb fehlerfreien Betrieb bzw. Zustand galvanisch nicht verbunden sind.

Unter redundant zueinander ausgeführten Sekundärinduktivitäten wird im Sinne der Erfindung vorzugsweise verstanden, dass die redundante Sekundärinduktivität die gleiche Funktion wie die andere Sekundärinduktivität erfüllt, bzw. ein Paar redundanter Sekundärinduktivitäten die gleiche Funktion erfüllen, wie das andere (eigentliche) Paar Sekundärinduktivitäten. Entsprechend sind zueinander redundante Sekundärinduktivitäten nahezu wirkungsgleich im Transformator positioniert, beispielsweise über- oder untereinander gewickelt.

Die redundanten Induktivitäten teilen sich vorzugsweise keinen gemeinsamen Fußpunkt, so dass ein diskreter Zugriff auf sämtliche verfügbaren Anschlüsse der sekundären Induktivitäten des Transformators eine Erkennung und Unterscheidung sämtlicher möglicher Fehlerfälle von galvanischen Verbindungen ermöglicht, die auftreten können.

Sofern die erste und zweite Sekundärinduktivität an eine gemeinsame Gleichspannungsquelle angeschlossen sind, werden die für jede Sekundärinduktivität individuell erforderlichen Gleichspannungspotenziale vorzugsweise mit Hilfe von Spannungsteilern aus der gemeinsamen Spannungsquelle abgeleitet.

Der Umfang der Diagnosemöglichkeiten mit dem erfindungsgemäßen Transformator kommt in Zusammenhang mit der oben beschriebenen Ausführungsform außerdem besonders gut zur Geltung.

Die Sekundärinduktivitäten weisen jeweils einen eigenen Anschluss an ein gemeinsames Bezugspotenzial bzw. einen eigenen Masseanschluss und jeweils eine galvanische Abkopplung davon auf, insbesondere in Form eines Kondensators. Die galvanische Abkopplung ist vorzugsweise am jeweiligen Wickelende vorgesehen, und stellt für die induzierten Wechselgrößen den jeweiligen Wechselstrom-Massebezugspunkt her. Durch die galvanische Trennung von der Erdung wird der Testschaltkreis aus Sicht der Wechselspannung geerdet, so dass aus Sicht der Wechselspannung nur der jeweilige Sekundärschaltkreis, nicht jedoch der Testschaltkreis vorhanden ist. Ist die galvanische Trennung ein Kondensator, so ist es hilfreich, wenn mit dem Transformator Wechselspannungen mit hohen Frequenzen, beispielsweise im oder oberhalb des kHz-Bereichs übertragen werden. Auf diese Weise kann für den Kondensator eine kleine Kapazität gewählt werden, so dass der Blindwiderstand des Kondensators vernachlässigt werden kann. Weiterhin ist es vorteilhaft, wenn der Kondensator auch hinsichtlich des auf die Wechselgröße Einfluss nehmenden Last- bzw. Eingangswiderstands optimiert ist.

Es ist bevorzugt, dass die jeweilige Testschaltung zwei Widerstände aufweist, zwischen denen der Abgriffspunkt angeordnet ist, so dass die Widerstände einen Spannungsteiler ausbilden, wobei insbesondere die jeweilige Sekundärinduktivität in Reihe zwischen den beiden Widerständen verschaltet ist. Durch die Spannungsteiler ergeben sich an den jeweiligen Abgriffspunkten Testspannungen, die darüber Aufschluss geben, ob und wie der jeweilige Spannungsteiler durch eine galvanische Verbindung oder Unterbrechung verändert wurde, also ob ein fehlerhafter Zustand vorliegt und um welche Art von fehlerhaftem Zustand es sich handelt. Vorzugsweise sind die Testschaltungen in die äußere Beschaltung des Übertragers des Transformators integriert.

Es ist bevorzugt, dass die Widerstände so dimensioniert sind, dass die Teilerverhältnisse der jeweiligen Spannungsteiler unterschiedlich sind.

Es ist bevorzugt, dass der Primärschaltkreis eine Gleichspannungsquelle aufweist, so dass an der Primärinduktivität ein bestimmtes Gleichspannungspotenzial anlegbar ist. Dass die Primärinduktivität auf einem festen und bekannten Gleichspannungspotenzial mit definiertem Innenwiderstand liegt, ist besonders hinsichtlich der Möglichkeit einer Erkennung von galvanischen Verbindungen zwischen beliebigen Sekundärinduktivitäten und der Primärinduktivität vorteilhaft.

Bevorzugt sind die elektrischen Komponenten der Testschaltungen so dimensioniert, dass bei verschiedenen fehlerbehafteten Zuständen, insbesondere Kurzschlüssen zwischen verschieden kombinierten Komponenten, jeweils für zumindest eine der Testspannungen, unter Berücksichtigung der jeweiligen maximalen Komponenten-Toleranzen, der Differenzbetrag zwischen der Testspannung im fehlerfreien Zustand und der Testspannung bei einem bestimmten der verschiedenen fehlerbehafteten Zustände möglichst groß ist.

Nach einer vorteilhaften Ausführungsform weist der Transformator eine an die jeweiligen Abgriffspunkte angeschlossene Analyse-Vorrichtung zur Weiterverarbeitung der Testspannungen auf, beispielsweise in Form eines Mikrocontrollers, wobei die Analyse-Vorrichtung dazu eingerichtet ist, die jeweilige Testspannung mit zumindest einer Schwellspannung zu vergleichen und davon abhängig eine Information darüber auszugeben, ob der Transformator einen fehlerbehafteten Zustand aufweist, insbesondere auch um welche Art von fehlerbehaftetem Zustand es sich handelt.

Bevorzugt sind die Abgriffspunkte über je einen Analog-Digital-Wandler an die Analyse-Vorrichtung angeschlossen. Indem die Weiterverarbeitung durch die Analyse-Vorrichtung digital erfolgt, ergibt sich eine einfache und langzeitstabile Einstellung der Entscheidungs-Schwellwerte bezüglich der Unterscheidung zwischen fehlerbehafteten Zuständen und dem nicht fehlerbehafteten Zustand.

Die jeweiligen Analog-Digital-Wandler sind bevorzugt mit der gemeinsamen Gleichspannungsquelle der Sekundärinduktivitäten als Bezugsspannungsquelle verbunden. Somit wird die absolute Größe der Spannungsquelle bzw. werden auftretende Betriebsspannungsungenauigkeiten unerheblich, da das gesamte System ein ratiometrisches Verhalten annimmt und die sich einstellenden Testspannungen praktisch nur vom sich einstellenden Teilerverhältnis der Spannungsteiler bestimmt werden, sowohl im regulären als auch im fehlerbehafteten Betrieb.

Gemäß einem weiteren Aspekt der Erfindung weist ein Sensor einen angegebenen Transformator auf, wobei der Sensor ausgebildet ist, anhand der Kopplung zwischen Primärinduktivität und Sekundärinduktivitäten den zurückgelegten Weg eines Gebers zu erfassen, wobei der Geber die Kopplung wegabhängig, insbesondere durch lokale Sättigung eines weichmagnetischen Kerns, beeinflusst. Bevorzugt gibt der Geber dabei die Stellung des Primärkolbens eines Tandemhauptzylinders einer Fahrzeugbremse wieder.

Die oben beschriebenen Eigenschaften, Merkmale und Vorteile der Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Dabei zeigen schematisch

Fig. 1    eine Schaltung eines Transformators

Fig. 2    eine Schaltung, die einen Teil des erfindungsgemäßen Ansatzes verdeutlicht,

Fig. 3    eine erfindungsgemäße Schaltung gemäß einem ersten Ausführungsbeispiel,

Fig. 4    eine erfindungsgemäße Schaltung gemäß einem zweiten Ausführungsbeispiel,

Fig. 5    eine vereinfachte Gleichspannungs-Ersatzschaltung gemäß dem zweiten Ausführungsbeispiel in verschiedenen fehlerbehafteten Zuständen,

Fig. 6    eine vereinfachte Gleichspannungs-Ersatzschaltung gemäß dem zweiten Ausführungsbeispiel in weiteren verschiedenen fehlerbehafteten Zuständen,

Fig. 7    eine vereinfachte Gleichspannungs-Ersatzschaltung gemäß dem zweiten Ausführungsbeispiel in einem der fehlerbehafteten Zustände aus Fig. 6,

Fig. 8    eine vereinfachte Gleichspannungs-Ersatzschaltung gemäß dem zweiten Ausführungsbeispiel in weiteren verschiedenen fehlerbehafteten Zuständen,

Fig. 9    ein stark schematisch dargestelltes Ausführungsbeispiel eines erfindungsgemäßen Sensors.

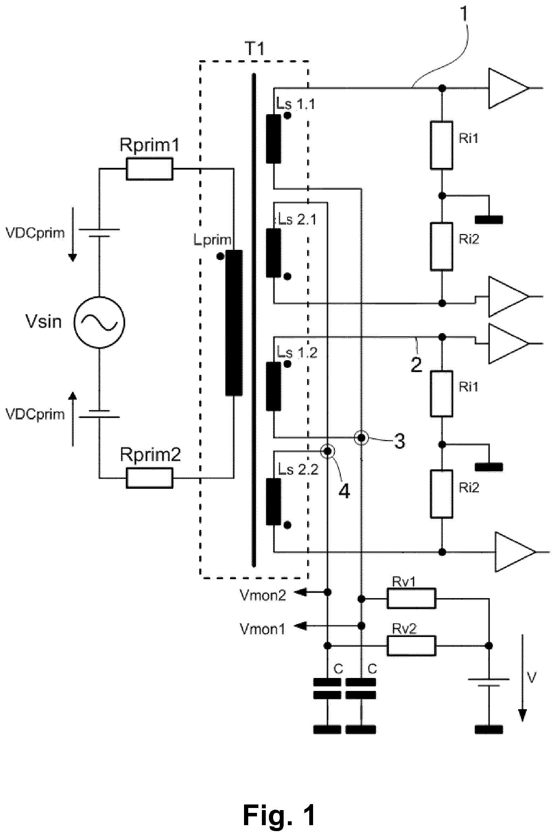

Es wird auf **Fig. 1** Bezug genommen, die eine Schaltung eines Transformators mit einem Primärschaltkreis und einer davon galvanisch getrennten Sekundärseite mit zwei redundant ausgeführten, insgesamt also vier Sekundärinduktivitäten Ls1.1, Ls1.2, Ls2.1, Ls2.2. Dabei bilden die Sekundärinduktivitäten Ls1.1 und Ls1.2 sowie die Sekundärinduktivitäten Ls2.1 und Ls2.2 jeweils einen ersten Pfad s1 und einen zweiten Pfad s2.
Nachfolgend werden Induktivitäten auch gleichbedeutend als Wicklungen oder Wicklungspakete bezeichnet. Durch induktive Kopplung bilden die Primärinduktivität Lprim und die Sekundärinduktivitäten Ls1.1 bis Ls2.2 einen Übertrager T1.
Die Primärinduktivität Lprim wird von einer symmetrischen bzw. je an jeder Seite anliegenden Sinus- Spannungsquelle niedriger Impedanz gespeist. Gleiche Gleichspannungsquellen $VDC_{prim}$ mit gleichem Potenzial an beiden Wickelenden sorgen dafür, dass durch die Primärwicklung Lprim kein Gleichstrom fließen kann, die Primärwicklung aber dennoch auf einem definierten, festen und niederimpedanten Gleichpotenzial liegt.
Um Wicklungspaketunterbrechungen und galvanische Verbindungen zu benachbarten Wicklungspaketen zuverlässig durch Auswertung von Gleichspannungspotenzialen ermitteln zu können, sind die beiden getrennten Masse Fußpunkte der Sekundärpfade s1 und s2 nicht galvanisch auf Masse bezogen, sondern werden durch Kondensatoren C geeigneter Größe abgekoppelt. Der Kapazitätswert kann klein gewählt werden, wenn die Sekundärseite hochimpedant belastet wird und/oder die Signalfrequenzen groß sind, so dass der Blindwiderstand des Kondensators C vernachlässigt werden kann. Für die Signalfrequenzen in den Sekundärwicklungen tritt sodann keine Veränderung bzgl. des gemeinsamen Masse- Bezugspunktes ein.
Durch die Gleichspannungsabkopplung lässt sich durch einen geeignet dimensionierten Spannungsteiler der jeweilige Sekundärpfad s1, s2 auf ein konstantes Potenzial legen, das das Normalpotenzial darstellt, wenn kein fehlerhafter Zustand vorliegt. Deutliche Abweichungen von diesem Potenzial deuten auf einen Fehlerfall durch Wicklungspaketunterbrechungen und galvanische Verbindungen zu benachbarten Wicklungspaketen hin.
Die Spannungsteiler werden durch die parallelen Widerstände Ri1 und den Widerstand Rv1 bzw. die parallelen Widerstände Ri2 und den Widerstand Rv2 gebildet.
Somit können mit Hilfe von den Wickelpaketen zugeordneter unterschiedlicher Quellpotenziale und unterschiedlicher Innenwiderstände der Gleichspannungsquellen fehlerhafte galvanische Verbindungen zwischen Primärwicklung zu beliebiger Sekundärwicklung, zwischen Sekundärwicklung zu redundanter, darüber liegender Sekundärwicklung sowie darüber hinaus eine Unterbrechung in einer beliebigen Sekundärwicklung eindeutig erkennbar gemacht werden, indem die Testspannungen Vmon1 und Vmon2 ausgewertet werden.
Als grundsätzliche Einschränkung dieses auf dem Vergleich von Gleichspannungspotenzialen basierenden Diagnoseverfahrens ergibt sich, dass Kurzschlussfehler ausschließlich nur zwischen Windungspaketen erkannt werden können, die im regulären, deshalb fehlerfreien Betrieb galvanisch nicht verbunden sind. Es können entsprechend keine Kurzschlüsse von Windungspaketen, die innerhalb eines redundanten Übertragerpfades s1, s2 angeordnet sind erkannt werden, weil deren Windungspakete innerhalb eines Pfades im gemeinsamen Fußpunkt galvanisch verbunden sind. Diese galvanische Verbindung ist in Fig. 1 durch den Verbindungsknoten 3 als Fußpunkt des Pfades s1 und als gemeinsamer Fußpunkt des Pfades s2 durch Verbindungsknoten 4 gekennzeichnet.

Wird beispielsweise mit der Verschaltung gemäß Fig. 1 ein Kurzschluss zwischen dem mit dem Bezugzeichen 1 gekennzeichneten Punkt und dem mit Bezugzeichen 2 gekennzeichneten Punkt erzeugt - die Wickelpakete des Pfades s1 sind dadurch (fehlerhaft) parallel geschaltet - so kann das für die Fehleranzeige zuständige Testpotenzial Vmon1 keinen Fehlerzustand kenntlich machen, weil sich das Gleichspannungspotenzial schlichtweg nicht verändert hat.

Dieser zunächst als unbedeutend erscheinende Fehler des Kurzschlusses von Wickelpaketen innerhalb eines Sekundärpfades entpuppt sich bei genauerer Betrachtung als bedeutsamer Fehler gleichen Ursprungs, denn obwohl der Fehler nur in einem eigentlich redundanten Sekundärpfad erzeugt wird, wirkt dieser aufgrund des Kurzschlusses und des sich daraus einstellenden Kurzschluss-Stromflusses über die Gegeninduktivität zurück auf den übrigen, fehlerfreien Signalpfad. In dieser Situation sind beide Sekundärpfade nicht mehr unabhängig voneinander und der Fehlerzustand in einem Pfad spricht in Abhängigkeit von der induktiven Kopplung des Transformators auf den eigentlich fehlerfreien Pfad über und zwängt ihm gewissermaßen den Signalzustand des fehlerhaften Pfades auf. Bei einer Anwendung des Transformators in einem Wegsensor ist die unmittelbare Folge eine Wegabweichung des Sensors in beiden Signalpfaden - das redundante Verhalten ist dadurch unwirksam gemacht worden - die mit dem in Fig. 1 dargestellten Transformator nicht kenntlich gemacht werden kann. Dies sollte bei Sensoren mit hohen Sicherheitsansprüchen jedoch vermieden werden.

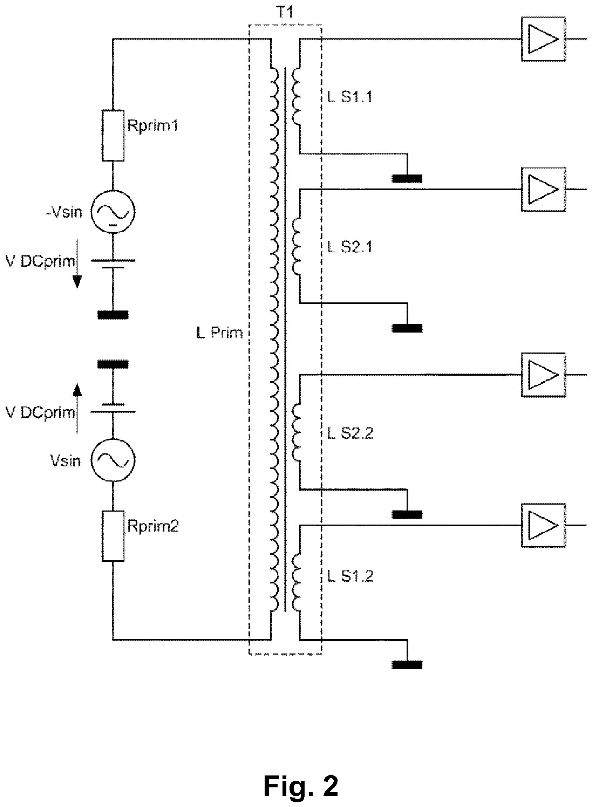

Um das in Zusammenhang mit Fig. 1 erläuterte Defizit in der Diagnosetiefe der Fehlerzustände zu beseitigen, ist in Fig. 2 ein prinzipieller Ansatz zu dessen Behebung aufgezeigt, wobei die Grundeigenschaften bezüglich der Diagnosetiefe erhalten bleiben. Hierzu ist zunächst die Verschaltung des Übertragers T1 gegenüber der Ausführung in Fig. 1 so verändert, dass die Wickelenden der Sekundärwickelpakete jeweils als einzelner, separater Anschluss zur Verfügung stehen. Die zu einem Signalpfad zugehörigen sekundären Wickelpakete Ls1.1 und Ls1.2 für Pfad s1 sowie Ls2.1 und Ls2.2 für Pfad s2 teilen sich nun also keinen gemeinsamen Fußpunkt mehr. Diese Übertragerausführung, die für die Anwendung eines erweiterten Diagnoseverfahrens geeignet ist, stellt Fig. 2 dar. Der diskrete Zugriff auf sämtliche verfügbaren Anschlüsse der sekundären Wicklungen Ls1.1, Ls1.2, Ls2.1, Ls2.2 des Übertragers T1 ermöglicht es, das ursprüngliche Diagnoseverfahren aus Fig. 1 so zu erweitern, dass sämtliche im Fehlerfall auftretenden galvanischen Verbindungen zwischen den einzelnen Sekundärwicklungen erkennbar gemacht werden können.

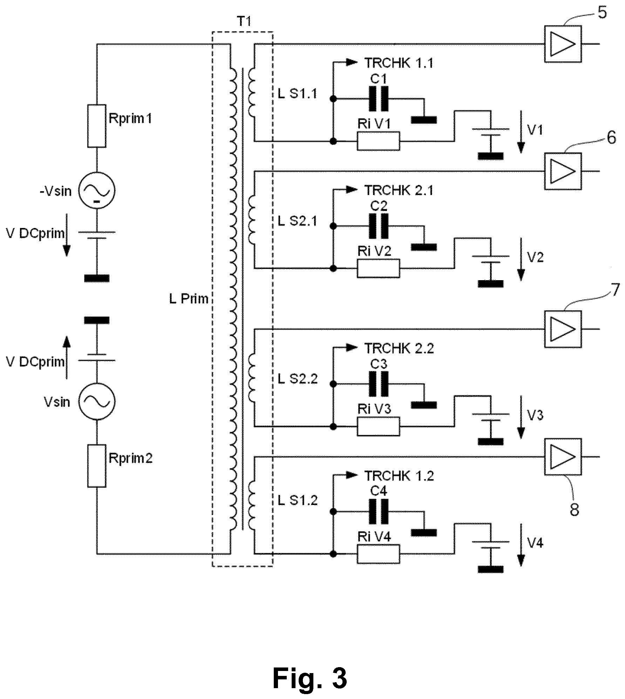

In **Fig. 3** ist ein erstes Ausführungsbeispiel eines erfindungsgemäßen Transformators dargestellt. Der induzierten Wechselgröße wird dabei in jeder Sekundärwicklung Ls1.1, Ls1.2, Ls2.1, Ls2.2 des redundanten Übertragers T1 ein individuelles Gleichspannungspotenzial durch Spannungsquellen V1, V2, V3, V4 überlagernd aufgeprägt. Zudem sollen für eine eindeutige Fehlerindizierung zusätzlich diese individuellen Gleichspannungsquellen jeweils individuelle Innen- bzw. Quellwiderstände RiV1, RiV2, RiV3, RiV4 aufweisen. Der Wechselstromkreis für die stets ebenfalls zu übertragende Wechselgröße wird durch die Fußpunktkondensatoren C1, C2, C3, C4 geschlossen. Die Unterscheidung zwischen regulärem, fehlerfreier Betrieb und Fehlerzustand wird über die auszuwertenden Prüfsignale TRCHK1.1, TRCHK1.2, TRCHK2.1, TRCHK2.2 vorgenommen, denn diese führen ein dem Betriebszustand des Übertragers T1 entsprechendes Gleichspannungspotenzial. Dass die Signalquelle Vsin zur Ansteuerung der Primärwicklung Lprim in diesem Ausführungsbeispiel eine symmetrische Spannungsquelle darstellt, ist für die Funktion des Diagnoseverfahrens von untergeordneter Bedeutung. Bedeutsam ist jedoch, dass die Primärwicklung auf einem festen und bekannten Gleichspannungspotenzial mit definiertem Innenwiderstand liegt. Diese Bedingung ist hier und in den weiteren Ausführungsbeispielen mit der Gleichspannungsquelle V_DCprim erfüllt.

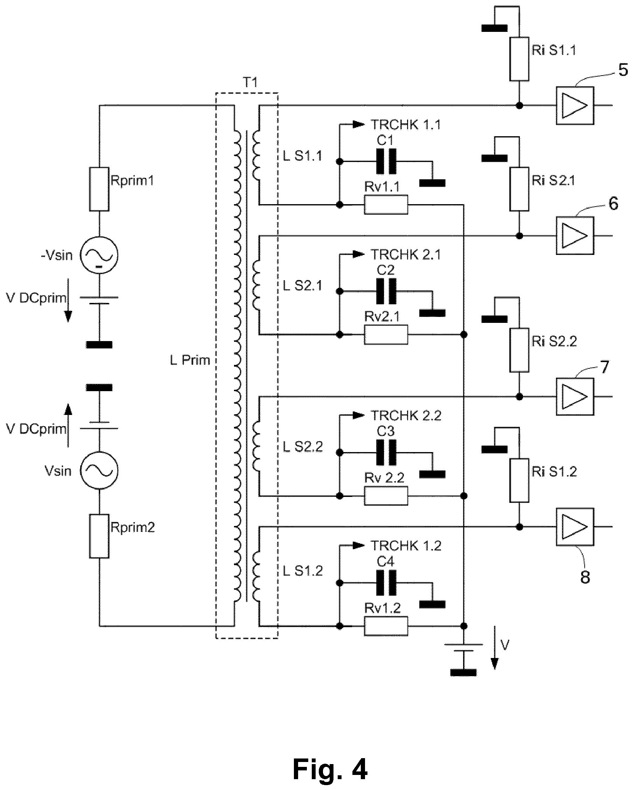

Das Ausführungsbeispiel der **Fig. 4** ist gegenüber Fig. 3 nach ökonomischen Gesichtspunkten etwas verändert. So werden die individuellen erforderlichen Gleichspannungspotenziale nicht mit einzelnen speziellen Spannungsquellen erzeugt, sondern mit Hilfe von Spannungsteilern aus einer gemeinsamen Spannungsquelle V abgeleitet.

Für die vier Sekundärinduktivitäten Ls1.1, Ls1.2, Ls2.1, Ls2.2 sind wiederum vier individuelle Fußpunktkondensatoren C1, C2, C3, C4 am jeweiligen Wickelende vorgesehen, die für die induzierten Wechselgrößen den jeweiligen Wechselstrom-Massebezugspunkt herstellen. Der Kapazitätswert kann klein gewählt werden, wenn das jeweils andere Ende der Sekundärwicklung nur hochimpedant durch die Widerstände RiS1.1, RiS1.2, RiS2.1, RiS2.2 und die jeweils parallel liegenden Wechselstromeingangswiderstände der Wechselspannungsverstärker 5, 6, 7, 8, relativ betrachtet im Verhältnis zum Blindwiderstand der Kondensatoren C1 bis C4, belastet werden. Die Kondensatoren C1 bis C4 werden sodann so dimensioniert, dass deren Blindwiderstand im gewählten Arbeitsfrequenzbereich des Sensors vernachlässigt werden kann.

Mit den Signalen TRCHK1.1, TRCHK1.2, TRCHK2.1, TRCHK2.2 werden über die jeweiligen Spannungsteilerhälften, die für das Testverfahren bedeutenden Vergleichspotenziale abgenommen, die durch die ausreichende Dimensionierung der Fußpunktkondensatoren C1 bis C4 praktisch völlig befreit von etwaigen Wechselspannungsresten weiterverarbeitet werden können. Diese Weiterverarbeitung kann beispielsweise nach Umwandlung durch Analog-Digital-Umsetzer im Digitalen erfolgen, wodurch sich eine einfache und langzeitstabile Einstellung der Entscheidungsschwellen bzgl. der Unterscheidung Fehlerzustand oder kein Fehlerzustand (regulärer Betrieb) ergibt.

Die Verwendung individuell dimensionierter Spannungsteiler hat neben den genannten ökonomischen Vorteilen, zugleich noch weitere positive Eigenschaften:

- Das gewählte Impedanzniveau des Spannungsteilers bestimmt gleichermaßen den individuellen Innenwiderstand der Quelle.
- Das gewählte Teilerverhältnis bestimmt das überlagerte Gleichspannungspotenzial der jeweiligen Sekundärwicklung.
- Wird die gemeinsame Spannungsquelle V sowohl als Versorgungsquelle der Spannungsteiler Rv1.1 zu RiS1.1, Rv1.2 zu RiS1.2, Rv2.1 zu RiS2.1, Rv2.2 zu RiS2.2 als auch als Referenzspannungsquelle für den auswertenden Analog nach Digital Umsetzer verwendet, so wird die absolute Größe der Spannungsquelle V unerheblich, da das gesamte System ein ratiometrisches Verhalten annimmt und die sich einstellenden Potenziale TRCHK1.1 bis TRCHK2.2 praktisch nur vom sich einstellenden Teilerverhältnis der Spannungsteiler, sowohl im regulären Betrieb als auch im Fehlerfall bestimmt wird.

Mit den Ausführungsbeispielen der Figuren 3 und 4 wird ein Diagnoseverfahren zur Erkennung von sekundären Wickelpaketunterbrechungen und galvanischen Verbindungen zu benachbarten Wickelpaketen ermöglicht, dass unabhängig von der wegbestimmenden Wechselgröße im Übertrager T1 und vor allen Dingen durchgängig bzw. unterbrechungsfrei während des Betriebs eine zuverlässige Prüfmöglichkeit des Transformators bereitstellt. Zudem ist das Verfahren sich selbst prüfend, denn Fehler jeglicher Art innerhalb der erweiterten Diagnoseeinrichtung führen unmittelbar zur Fehleranzeige, so dass hierdurch bedingte latente Fehler bereits durch die Grundstruktur des Verfahrens sicher vermieden werden.

Mit den in der Transformatorschaltung der Fig. 4 organisch integrierten Spannungsteilern sind mit den Testspannungen TRCHK1.1 bis TRCHK2.2 sekundärwicklungs-individuelle Prüfsignale zur Verfügung gestellt worden, die in Abhängigkeit vom Betriebszustand des Übertragers T1 bestimmte Gleichspannungspotenziale annehmen und dadurch über die Auswertung des Gleichspannungspotenzials eine zuverlässige Entscheidungsgrundlage dafür schaffen, ob der Transformator sich im regulären, d.h. fehlerfreien oder aber in fehlerbehaftetem Betriebszustand befindet.

Im fehlerfreien Regelbetrieb stellten sich vier aus der Dimensionierung der Spannungsteiler ergebende Normalpotenziale ein. Bezüglich der mit dem Verfahren erkennbaren Fehlerzustände des Übertragers T1, kann man grob drei verschiedene Fehlerklassen unterscheiden:

Typ A - Galvanische Verbindungen zwischen beliebigen SekundärWickelpaketen.

Typ B - Galvanische Verbindungen zwischen beliebigen SekundärWickelpaketen und der Primärwicklung.

Typ C - Elektrische Unterbrechung einer oder mehrerer SekundärWickelpakete.

Diese groben Fehlerklassen beinhalten eine Vielzahl von möglichen Einzelfehlern, die nachfolgend im Detail näher betrachtet werden sollen.

Befindet sich der Übertrager T1 nach Fig. 4 in regulärer Betriebsweise, d.h. es ist kein Fehler aufgetreten, so ergeben sich die Potenziale der Prüfsignale TRCHK1.1 bis TRCHK2.2 entsprechend der dimensionierten Spannungsteiler aus der einfachen Spannungsteilerregel. Es gilt daher:

$$TRCHK1.1 = \frac{V}{\frac{Rv1.1}{RiS1.1} + 1}$$

$$TRCHK1.2 = \frac{V}{\frac{Rv1.2}{RiS1.2} + 1}$$

$$TRCHK2.1 = \frac{V}{\frac{Rv2.1}{RiS2.1} + 1}$$

$$TRCHK2.2 = \frac{V}{\frac{Rv2.2}{RiS2.2} + 1}$$

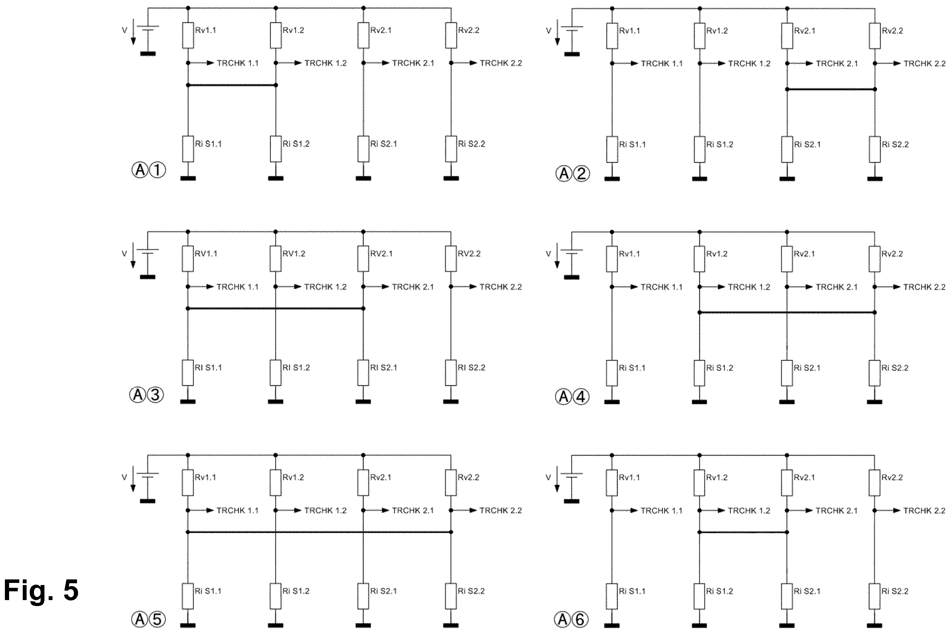

In der Fehlergruppe des Typs A, mit galvanischen Verbindungen zwischen beliebigen Sekundärwickelpaketen, können bei einem Übertrager mit insgesamt vier unabhängigen Sekundärwicklungen sechs verschiedene Fehlerzustände A1 bis A6 auftreten. Diese sind in den Gleichstrom- Ersatzschaltungen der **Fig. 5** grafisch zusammengefasst dargestellt.

Die Ersatzschaltung berücksichtigt nur die für das Gleichstrompotenzial an TRCHK1.1 bis TRCHK2.2 bedeutsamen Komponenten. Die übrigen Schaltungsteile des Transformators sind in dieser Darstellung entfallen. Aus den Ersatzschaltbildern ist zu entnehmen, dass der jeweilige Fehlerzustand zu einer Parallelschaltung jeweils zweier Spannungsteilerhälften führt. Die sich im Fehlerfall ergebenden Potenziale für die TRCHK-Prüfsignale, also die Testspannungen, sind demnach unter Berücksichtigung der jeweils parallel geschalteten Spannungsteilerhälften bestimmbar. Es gilt mit der einfachen Spannungsteilerregel

für Fehlerzustand A1:

$$TRCHK1.1 = TRCHK1.2 = \frac{V}{\dfrac{\dfrac{Rv1.1 * Rv1.2}{Rv1.1 + Rv1.2}}{\dfrac{RiS1.1 * RiS1.2}{RiS1.1 + RiS1.2}} + 1}$$

für Fehlerzustand A2:

$$TRCHK1.1 = TRCHK1.2 = \frac{V}{\dfrac{\dfrac{Rv2.1 * Rv2.2}{Rv2.1 + Rv2.2}}{\dfrac{RiS2.1 * RiS2.2}{RiS2.1 + RiS2.2}} + 1}$$

für Fehlerzustand A3:

$$TRCHK1.1 = TRCHK1.2 = \frac{V}{\dfrac{\dfrac{Rv1.1 * Rv2.1}{Rv1.1 + Rv2.1}}{\dfrac{RiS1.1 * RiS2.1}{RiS1.1 + RiS2.1}} + 1}$$

für Fehlerzustand A4:

$$TRCHK1.1 = TRCHK1.2 = \frac{V}{\dfrac{\dfrac{Rv1.2 * Rv2.2}{Rv1.2 + Rv2.2}}{\dfrac{RiS1.2 * RiS2.2}{RiS1.2 + RiS2.2}} + 1}$$

für Fehlerzustand A5:

$$TRCHK1.1 = TRCHK1.2 = \frac{V}{\dfrac{\dfrac{Rv1.1 * Rv2.2}{Rv1.1 + Rv2.2}}{\dfrac{RiS1.1 * RiS2.2}{RiS1.1 + RiS2.2}} + 1}$$

für Fehlerzustand A6:

$$TRCHK1.1 = TRCHK1.2 = \cfrac{V}{\cfrac{\cfrac{Rv2.1 * Rv1.2}{Rv2.1 + Rv1.2}}{\cfrac{RiS2.1 * RiS1.2}{RiS2.1 + RiS1.2}} + 1}$$

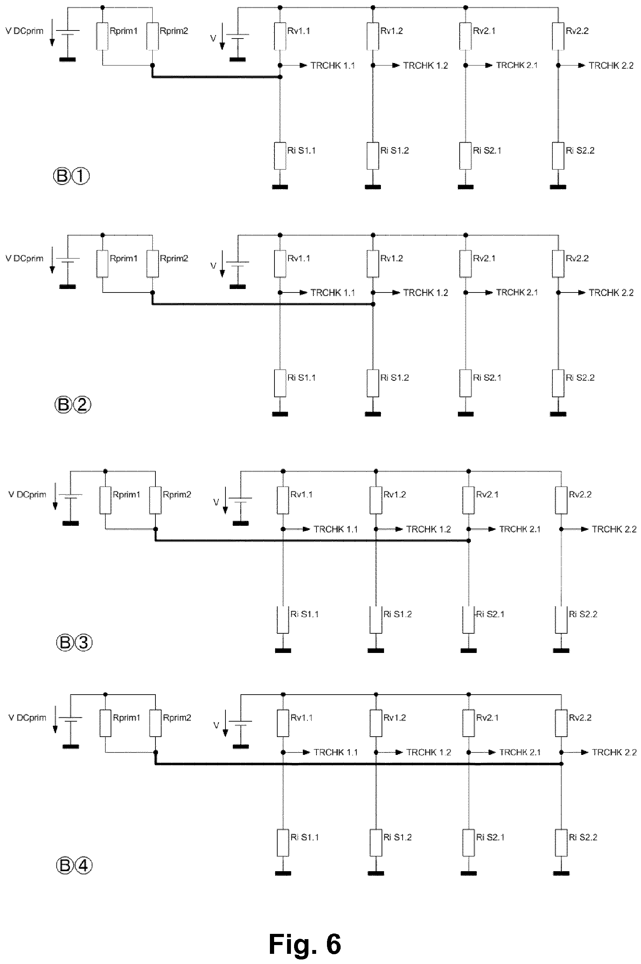

In der Fehlergruppe des Typs B, die galvanische Verbindungen zwischen beliebigen Sekundärwicklungen mit der Primärwicklung zusammenfasst, ergeben sich vier einzelne Fehlerzustände B1 bis B4. Auch hier lassen sich vereinfachte Gleichstrom-Ersatzschaltungen ableiten, die in **Fig. 6** dargestellt sind.

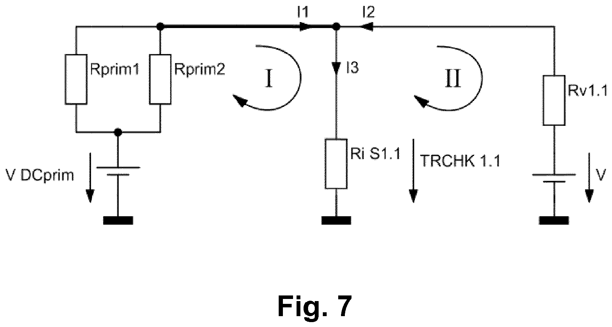

Das für die jeweiligen Fehlerzustände entstehende elektrische Netzwerk ist am Beispiel des Fehlerzustands B1, bei dem die Sekundärwicklung Ls1.1 galvanisch mit der Primärwicklung Lprim verbunden ist, ist in **Fig. 7** in anderer Form nochmals dargestellt. Die sich im Fehlerfalle einstellende Spannung an TRCHK1.1 - dieses Prüfsignal verändert sich bei diesem Fehlerzustand ausschließlich - kann auf einfache Weise mit den entsprechenden Knotenpunkt- und Maschengleichungen, wie in Fig. 7 dargestellt, ermittelt werden.

Aus den Knotenpunkt- und Maschengleichungen für B1 ergibt sich:

$$0 = I1 + I2 - I3$$

$$0 = I1 * \frac{Rprim1 * Rprim2}{Rprim1 + Rprim2} + I3 * RiS1.1 - VDCprim$$

$$0 = -I2 * Rv1.1 - I3 * RiS1.1 + V$$

Mit TRCHK1.1 = I3*RiS1.1 erhält man nach Auflösen des Gleichungssystems die explizite Darstellung für das Prüfsignal TRCHK1.1 des Fehlerzustands B1:

$$TRCHK1.1 = RiS1.1 * \cfrac{V * \cfrac{\cfrac{Rprim1 * Rprim2}{Rprim1 + Rprim2}}{Rv1.1} + VDCprim}{\cfrac{(Rv1.1 + RiS1.1) * \cfrac{Rprim1 * Rprim2}{Rprim1 + Rprim2}}{Rv1.1} + RiS1.1}$$

Die übrigen drei Bestimmungsgleichungen für TRCHK1.2 bei Fehlerzustand B2, TRCHK2.1 bei Fehlerzustand B3 und TRCHK2.2 bei Fehlerzustand B4 können analog zu obiger Vorgehensweise ermittelt werden.

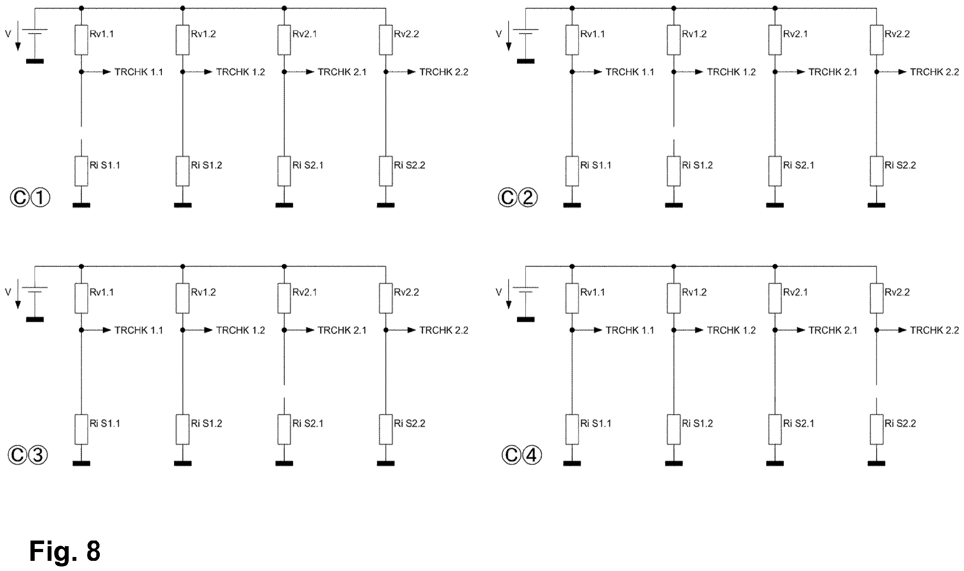

Die Fehlergruppe des Typs C ist gekennzeichnet durch Unterbrechungen beliebiger Sekundärwicklungen, wobei aufgrund der Unabhängigkeit der Spannungsteiler auch mehrere Fehlerzustände dieser Fehlergruppe zugleich auftreten können, ohne dass die Diagnosefähigkeit beeinträchtigt wird. Aus den Gleichstrom-Ersatzschaltungen in **Fig. 8** mit den Fehlerzuständen C1 bis C4 wird ersichtlich, dass im Fehlerfall durch die Wicklungsunterbrechung auch der jeweilige Spannungsteiler aufgetrennt wird und demnach das jeweilige Prüfsignal TRCHK das gesamte Potenzial der Spannungsquelle V aufweist. Es gilt daher

für Fehlerzustand C1:

$$TRCHK1.1 = V$$

für Fehlerzustand C2:

$$TRCHK1.2 = V$$

für Fehlerzustand C3:

$$TRCHK2.1 = V$$

für Fehlerzustand C4:

$$TRCHK2.2 = V$$

Gemäß einem weiteren Ausführungsbeispiel, dass in keiner der Figuren dargestellt ist, sind die Widerstände RiS1.1 und RiS2.2 an die gemeinsame Spannungsquelle angeschlossen, während die Widerstände Rv1.1 und Rv2.2 an Massepotenzial angeschlossen sind. Durch diese Ausführung erhält man, bei in diesem Beispiel fest vorgegebenen Widerstandswerten Ri, ein Optimum bezüglich der Potenzialdifferenz zwischen regulärem fehlerfreiem Betrieb und Fehlerzustand insbesondere bei galvanischen Verbindungen zwischen den Sekundärwicklungen, also Fehlern des Typs A. Dies ist darauf zurück zu führen, dass insbesondere bei Fehlerzuständen der Fehlergruppe A sowohl ein günstig gewähltes Spannungsteiler-Ruhepotenzial (TRCHK1.1 bis TRCHK2.2), als auch das Impedanzniveauverhältnis der Spannungsteiler zueinander, die resultierende Potenzialdifferenz zwischen regulärem fehlerfreiem Betrieb und Fehlerzustand bestimmt.

Bei der Dimensionierung der elektrischen Komponenten sind deren Toleranzen zu berücksichtigen. Das grundsätzliche Ziel einer möglichst vorteilhaften Dimensionierung des Transformators bzw. der Testschaltungen ist es, einen möglichst großen, prägnanten Abstand für mindestens eine der Testspannungen TRCHK1.1 bis TRCHK2.2 über die gesamten Fehlerzustände hinweg zu erhalten.

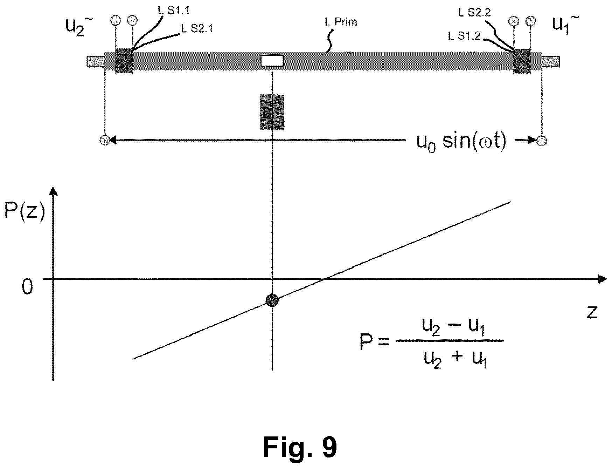

Ein erfindungsgemäßer Sensor mit einem zuvor beschriebenen Transformator ist in **Fig. 9** stark schematisch dargestellt. Die Primärinduktivität Lprim ist durchgängig über einen weichmagnetischen Kern gewickelt, an dessen Enden die Sekundärinduktivitäten Ls1.1, Ls1.2, sowie aus Sicherheitsgründen redundant dazu die Sekundärinduktivitäten Ls2.1, Ls2.2 aufgewickelt sind. Ein Geber, dessen zurückgelegter Weg mit dem Sensor gemessen wird, ist als Permanentmagnet ausgebildet und treibt den weichmagnetischen Kern lokal in eine magnetische Sättigung. Dies beeinflusst die Kopplung zwischen der Primärinduktivität Lprim und den Sekundärinduktivitäten Ls1.1, Ls1.2, Ls2.1, Ls2.2, so dass daraus der zurückgelegte Weg des Gebers abgeleitet werden kann.

Sofern sich bei der Dimensionierung ein ausreichend großer minimaler Potenzialabstand zwischen regulärem, fehlerfreiem Betrieb und einem beliebigen Fehlerzustand, unter Berücksichtigung der beteiligten Toleranzen, ergibt, ist von einer äußerst robusten Betriebsweise des Transformators auszugehen, bei der die Gefahr einer Fehldiagnose praktisch vollkommen ausgeschlossen ist.

Insbesondere bei einer Verwendung des Transformators in Sensoren für Anwendungen mit höchsten Sicherheitsansprüchen, sollte eine Erkennung eines fehlerhaften Zustands nicht nur zuverlässig, sondern auch schnell erfolgen. Aufgrund der in den beschriebenen Schaltungen des Transformators verwendeten RC-Netzwerke, kommt es mit dem Übergang vom regulären, fehlerfreien Zustand in einen fehlerhaften Zustand zu elektrischen Ausgleichsvorgängen, die in Abhängigkeit von den wirksamen Zeitkonstanten des individuellen Netzwerks zu einer Anzeige-Verzögerungszeit des Fehlerzustands führen. In Versuchen hat sich jedoch gezeigt, dass auch die längste auftretende Zeitspanne so gering ist, dass die mit dem Transformator durchführbare Diagnose auch für äußerst reaktionsschnelle Anwendungen zur Fehleranzeige geeignet ist.

**Patentansprüche**

1. Transformator, umfassend:

   - einen Primärschaltkreis mit einer Primärinduktivität (Lprim),
   - einen ersten Sekundärschaltkreis mit einer von der Primärinduktivität (Lprim) galvanisch getrennten und mit der Primärinduktivität (Lprim) gekoppelten ersten Sekundärinduktivität (Ls1.1),
   - einen zweiten Sekundärschaltkreis mit einer von der Primärinduktivität galvanisch getrennten und mit der Primärinduktivität gekoppelten zweiten Sekundärinduktivität (Ls2.1), wobei die zweite Sekundärinduktivität (Ls2.1) redundant zu der ersten Sekundärinduktivität (Ls1.1) ausgeführt ist, wobei die erste und zweite Sekundärinduktivität (Ls1.1, LS2.1) an eine oder je an eine Gleichspannungsquelle (V, V1, V2) sowie je an eine Testschaltung mit einem Abgriffspunkt zum Abgreifen einer Testspannung (TRCHK1.1, TRCHK2.1) angeschlossen sind, einen dritten Sekundärschaltkreis mit einer von der Primärinduktivität (Lprim) galvanisch getrennten und mit der Primärinduktivität (Lprim) gekoppelten dritten Sekundärinduktivität (Ls1.2), einen vierten Sekundärschaltkreis mit einer von der Primärinduktivität (Lprim) galvanisch getrennten und mit der Primärinduktivität (Lprim) gekoppelten vierten Sekundärinduktivität (Ls2.2), wobei die vierte Sekundärinduktivität (Ls2.2) redundant zu der dritten Sekundärinduktivität (Ls1.2) ausgeführt ist, wobei die dritte und vierte Sekundärinduktivität (Ls1.2, Ls2.2) je an eine Gleichspannungsquelle (V3, V4) oder an die Gleichspannungsquelle (V) der ersten und zweiten Sekundärinduktivität (Ls1.1, Ls2.1) sowie je an eine Testschaltung mit einem Abgriffspunkt zum Abgreifen einer Testspannung (TRCHK1.2, TRCHK2.2) angeschlossen sind,
wobei die Sekundärinduktivitäten (Ls1.1, Ls2.1, Ls1.2, Ls2.2) jeweils einen eigenen Masseanschluss und jeweils eine galvanische Abkopplung von dem Masseanschluss aufweisen.

2. Transformator gemäß Anspruch 1, **dadurch gekennzeichnet, dass** die jeweilige Testschaltung zwei Widerstände (Rv1.1, RiS1.1) aufweist, zwischen denen der Abgriffspunkt angeordnet ist, so dass die Widerstände (Rv1.1, RiS1.1) einen Spannungsteiler ausbilden, wobei insbesondere die jeweilige Sekundärinduktivität (Ls1.1, LS2.1) in Reihe zwischen den beiden Widerständen (Rv1.1, RiS1.1) verschaltet ist.

3. Transformator gemäß Anspruch 2, **dadurch gekennzeichnet, dass** die Widerstände (Rv1.1, RiS1.1) so dimensioniert sind, dass die Teilerverhältnisse der jeweiligen Spannungsteiler unterschiedlich sind.

4. Transformator gemäß einem der vorhergehenden Ansprüche, **dadurch gekennzeichnet, dass** die Sekundärinduktivitäten (Ls1.1, Ls2.1) jeweils einen eigenen Masseanschluss und jeweils eine galvanische Abkopplung von dem Masseanschluss in Form eines Kondensators (C1, C2, C3, C4) aufweisen.

5. Transformator gemäß einem der vorhergehenden Ansprüche, **dadurch gekennzeichnet, dass** der Primärschaltkreis eine Gleichspannungsquelle (VDCprim) aufweist, so dass an der Primärinduktivität (Lprim) ein bestimmtes Gleichspannungspotenzial anlegbar ist.

6. Transformator gemäß einem der vorhergehenden Ansprüche, **dadurch gekennzeichnet, dass** die elektrischen Komponenten der Testschaltungen so dimensioniert sind, dass bei verschiedenen fehlerbehafteten Zuständen, insbesondere Kurzschlüssen zwischen verschieden kombinierten Komponenten, jeweils für zumindest eine der Testspannungen (TRCHK), unter Berücksichtigung der jeweiligen maximalen Komponenten-Toleranzen, der Differenzbetrag zwischen der Testspannung (TRCHK) im fehlerfreien Zustand und der Testspannung (TRCHK) bei einem bestimmten der verschiedenen fehlerbehafteten Zustände möglichst groß ist.

7. Transformator gemäß einem der vorhergehenden Ansprüche, **gekennzeichnet durch** eine an die jeweiligen Abgriffspunkte angeschlossene Analyse-Vorrichtung zur Weiterverarbeitung der Testspannungen (TRCHK), wobei die Analyse-Vorrichtung dazu eingerichtet ist, die jeweilige Testspannung (TRCHK) mit zumindest einer Schwellspannung zu vergleichen und davon abhängig eine Information darüber auszugeben, ob der Transformator einen fehlerbehafteten Zustand aufweist, insbesondere auch um welche Art von fehlerbehaftetem Zustand es sich handelt.

8. Transformator gemäß Anspruch 7, **dadurch gekennzeichnet, dass** die Abgriffspunkte über je einen Analog-Digital-Wandler an die Analyse-Vorrichtung angeschlossen sind.

9. Transformator gemäß Anspruch 8, **dadurch gekennzeichnet, dass** die jeweiligen Analog-Digital-Wandler mit der gemeinsamen Gleichspannungsquelle (V) der Sekundärinduktivitäten (Ls1.1, Ls2.1) als Bezugsspannungsquelle verbunden sind.

10. Sensor, aufweisend einen Transformator nach einem der Ansprüche 1 bis 9, **dadurch gekennzeichnet, dass** der Sensor ausgebildet ist, anhand einer Kopplung zwischen Primärinduktivität (Lprim) und Sekundärinduktivitäten (Ls1.1, Ls1.2) den zurückgelegten Weg eines Gebers zu erfassen, wobei der Geber die Kopplung wegabhängig, insbesondere durch lokale Sättigung eines weichmagnetischen Kerns, beeinflusst.

## Claims

1. Transformer, comprising:

   - a primary circuit with a primary inductor (Lprim),
   - a first secondary circuit with a first secondary inductor (Ls1.1) that is galvanically isolated from the primary inductor (Lprim) and coupled to the primary inductor (Lprim),
   - a second secondary circuit with a second secondary inductor (Ls2.1) that is galvanically isolated from the primary inductor and coupled to the primary inductor, wherein the second secondary inductor (Ls2.1) is implemented redundantly with respect to the first secondary inductor (Ls1.1),
wherein the first and second secondary inductors (Ls1.1, LS2.1) are connected to one, or each to one, DC voltage source (V, V1, V2) as well as each to a test circuit with a tapping point for tapping off a test voltage (TRCHK1.1, TRCHK2.1),
a third secondary circuit with a third secondary inductor (Ls1.2) that is galvanically isolated from the primary inductor (Lprim) and coupled to the primary inductor (Lprim), a fourth secondary circuit with a fourth secondary inductor (Ls2.2) that is galvanically isolated from the primary inductor (Lprim) and coupled to the primary inductor (Lprim), wherein the fourth secondary inductor (Ls2.2) is implemented redundantly with respect to the third secondary inductor (Ls1.2),
wherein the third and fourth secondary inductors (Ls1.2, Ls2.2) are each connected to a DC voltage source (V3, V4) or to the DC voltage source (V) of the first and second secondary inductors (Ls1.1, Ls2.1), as well as each to a test circuit with a tapping point for tapping off a test voltage (TRCHK1.2, TRCHK2.2), wherein the secondary inductors (Ls1.1, Ls2.1, Ls1.2, Ls2.2) each comprise their own earth connection and each comprise a galvanic isolation from the earth connection.

2. Transformer according to Claim 1, **characterized in that** the respective test circuit comprises two resistors (Rv1.1, RiS1.1) between which the tapping point is arranged, so that the resistors (Rv1.1, RiS1.1) form a voltage divider, wherein in particular the respective secondary inductor (Ls1.1, LS2.1) is connected in series between the two resistors (Rv1.1, RiS1.1).

3. Transformer according to Claim 2, **characterized in that** the resistors (Rv1.1, RiS1.1) are dimensioned such that the division ratios of the respective voltage dividers are different.

4. Transformer according to one of the preceding claims, **characterized in that** the secondary inductors (Ls1.1, Ls2.1) each comprise their own earth connection and each comprise a galvanic isolation from the earth connection in the form of a capacitor (C1, C2, C3, C4).

5. Transformer according to one of the preceding claims, **characterized in that** the primary circuit comprises a DC voltage source (VDCprim), so that a specific DC voltage potential can be applied to the primary inductor (Lprim).

6. Transformer according to one of the preceding claims, **characterized in that** the electrical components of the test circuits are dimensioned such that in the case of different defective states, in particular short circuits between different combinations of components, the size of the difference between the test voltage (TRCHK) in the fault-free state and the test voltage (TRCHK) in the case of a particular one of the different defective states is as large as possible in each case for at least one of the test voltages (TRCHK), taking into account the respective maximum component tolerances.

7. Transformer according to one of the preceding claims, **characterized by** an analysis apparatus for further processing of the test voltages (TRCHK) that is attached to the respective tapping points, wherein the analysis apparatus is configured to compare the respective test voltage (TRCHK) with at least one threshold voltage and, depending thereon, to output information as to whether the transformer has a defective state, in particular also as to what type of defective state is involved.

8. Transformer according to Claim 7, **characterized in that** the tapping points are connected to the analysis apparatus through an analogue/digital converter in each case.

9. Transformer according to Claim 8, **characterized in that** the respective analogue/digital converters are connected to the common DC voltage source (V) of the secondary inductors (Ls1.1, Ls2.1) as the reference voltage source.

10. Sensor comprising a transformer according to one of Claims 1 to 9, **characterized in that** the sensor is designed to register the distance covered by an encoder on the basis of a coupling between the primary inductor (Lprim) and the secondary inductors (Ls1.1, Ls1.2), wherein the encoder influences the coupling depending on the distance, in particular as a result of local saturation of a soft-magnetic core.

**Revendications**

1. Transformateur comprenant :

   - un circuit primaire muni d'une inductance primaire (Lprim),
   - un premier circuit secondaire muni d'une première inductance secondaire (Ls1.1) isolée galvaniquement de l'inductance primaire (Lprim) et couplée à l'inductance primaire (Lprim),
   - un deuxième circuit secondaire muni d'une deuxième inductance secondaire (Ls2.1) isolée galvaniquement de l'inductance primaire et couplée à l'inductance primaire, la deuxième inductance secondaire (Ls2.1) étant redondante par rapport à la première inductance secondaire (Ls1.1),
   la première et la deuxième inductance secondaire (Ls1.1, LS2.1) étant raccordées à une ou, chacune à une, source de tension continue (V, V1, V2) et chacune à un circuit de test muni d'un point de prélèvement destiné à prélever une tension de test (TRCHK1.1, TRCHK2.1),
   un troisième circuit secondaire muni d'une inductance secondaire (Ls1.2) isolée galvaniquement de l'inductance primaire (Lprim) et couplée à l'inductance primaire (Lprim), un quatrième circuit secondaire muni d'une quatrième inductance secondaire (Ls2.2) isolée galvaniquement de l'inductance primaire (Lprim) et couplée à l'inductance primaire (Lprim), la quatrième inductance secondaire (Ls2.2) étant redondante par rapport à la troisième inductance secondaire (Ls1.2), les troisième et quatrième inductances secondaires (Ls1.2, Ls2.2) étant raccordées chacune à une source de tension continue (V3, V4) ou à la source de tension continue (V) des première et deuxième inductances secondaires (Ls1.1, Ls2.1) et chacune à un circuit de test muni d'un point de prélèvement destiné à prélever une tension de test (TRCHK1.2, TRCHK2.2),
   les inductances secondaires (Ls1.1, Ls2.1, Ls1.2, Ls2.2) comportant chacune leur propre borne de masse et chacune un découplage galvanique de la borne masse.

2. Transformateur selon la revendication 1, **caractérisé en ce que** le circuit de test respectif comporte deux résistances (Rv1.1, RiS1.1) entre lesquelles le point de prélèvement est disposé de sorte que les résistances (Rv1.1, RiS1.1) forment un diviseur de tension, en particulier l'inductance secondaire respective (Ls1.1, LS2.1) étant montée en série entre les deux résistances (Rv1.1, RiS1.1).

3. Transformateur selon la revendication 2, **caractérisé en ce que** les résistances (Rv1.1, RiS1.1) sont dimensionnées de sorte que les rapports de division des diviseurs de tension respectifs soient différents.

4. Transformateur selon l'une des revendications précédentes, **caractérisé en ce que** les inductances secondaires (Ls1.1, Ls2.1) comportent chacune leur propre borne de masse et comportent chacune un découplage galvanique de la borne de masse sous la forme d'un condensateur (C1, C2, C3, C4).

5. Transformateur selon l'une des revendications précédentes, **caractérisé en ce que** le circuit primaire comporte une source de tension continue (VDCprim) de sorte qu'un potentiel de tension continue déterminé puisse être appliqué à l'inductance primaire (Lprim).

6. Transformateur selon l'une des revendications précédentes, **caractérisé en ce que** les composants électriques des circuits de test sont dimensionnés de sorte que, dans divers états défectueux, en particulier des courts-circuits entre des composants combinés différemment, à chaque fois pour au moins une des tensions de test (TRCHK), avec prise en compte des tolérances maximales respectives des composants, la valeur de différence entre la tension de test (TRCHK) à l'état sans défaut et la tension de test (TRCHK) soit aussi grande que possible dans un état déterminé parmi les divers états défectueux.

7. Transformateur selon l'une des revendications précédentes, **caractérisé par** un dispositif d'analyse raccordé aux points de prélèvement respectifs et destiné au traitement ultérieur des tensions de test (TRCHK), le dispositif d'analyse étant conçu pour comparer la tension de test respective (TRCHK) à au moins une tension de seuil et, en fonction de celle-ci, pour délivrer une information indiquant si le transformateur présente un état défectueux, en particulier également de quel type d'état défectueux il s'agit.

8. Transformateur selon la revendication 7, **caractérisé en ce que** les points de prélèvement sont raccordés chacun au dispositif d'analyse par le biais d'un convertisseur analogique/numérique respectif.

9. Transformateur selon la revendication 8, **caractérisé en ce que** les convertisseurs analogique-numérique respectifs sont reliés à la source de tension continue commune (V) des inductances secondaires (Ls1.1, Ls2.1) comme source de tension de référence.

10. Capteur, comportant un transformateur selon l'une des revendications 1 à 9, **caractérisé en ce que** le capteur est conçu pour détecter le chemin d'un transmetteur qui a été parcouru sur la base d'un couplage entre inductance primaire (Lprim) et des inductances secondaires (Ls1.1, Ls1.2), le transmetteur influant sur le couplage en fonction du chemin, en particulier par la saturation locale d'un noyau magnétique doux.

EP 3 837 497 B1

**Fig. 1**

**Fig. 2**

**Fig. 3**

Fig. 4

Fig. 5

Fig. 6

**Fig. 7**

Fig. 8

$$P = \frac{u_2 - u_1}{u_2 + u_1}$$

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4425903 C3
- EP 238922 B1
- WO 2015044307 A1